# DEMANDE DE BREVET EUROPEEN

(11) **EP 3 882 331 A1**
(43) Date de publication de la demande: **22.09.2021**
(21) Numéro de dépôt: 21162595.9
(22) Date de dépôt: 15.03.2021
(51) Int. Cl.: C12G 3/06, C12G 1/06, C12G 1/073, C12H 1/22

(54) **PROCÉDÉ DE FABRICATION D'UNE BOISSON ALCOOLISÉE MOUSSEUSE**

(30) Priorité: 17.03.2020 FR 2002595
(71) Demandeur: Ruelle, Hervé, 02310 Domptin (FR)
(72) Inventeur: RUELLE, Hervé, 02310 DOMPTIN (FR)
(74) Mandataire: Plasseraud IP

(57) **Abrégé**

Procédé de fabrication de boisson alcoolisée mousseuse par vinification, comprenant les étapes :
b) une étape de prise en mousse comprenant l'ajout de levure et de sucre, voire d'une liqueur de tirage, lors du tirage dans une bouteille contenant un assemblage d'un ou plusieurs vins de base, et de sorte à obtenir par fermentation du sucre la production de gaz carbonique dissout ; puis
c) une étape de dégorgement et de dosage, comprenant l'évacuation de la lie de levures mortes de la bouteille et en l'ajout d'une liqueur de dosage ; puis e) une étape de rebouchage de la bouteille,
**caractérisé en ce que** le procédé comporte en outre, entre l'étape c) et l'étape e) une étape d) d'introduction d'une gousse de vanille ou d'une ou plusieurs portions d'une gousse de vanille dans la bouteille.

## Description

### Domaine technique

La présente invention est relative à la fabrication des boissons alcoolisées mousseuses par vinification.

### Technique antérieure

On connaît de l'art antérieur, et depuis un certain temps, des procédés de fabrication de boisson alcoolisée mousseuse, comme par exemple le champagne, par vinification.

De façon bien connue, la méthode de vinification comprend généralement :
b) une étape de prise en mousse comprenant l'ajout de levure et de sucre, voire d'une liqueur de tirage, lors du tirage dans une bouteille contenant un assemblage d'un ou plusieurs vins de base, et de sorte à obtenir par fermentation du sucre la production de gaz carbonique dissout ; puis
c) une étape de dégorgement et de dosage, comprenant l'évacuation de la lie de levures mortes de la bouteille et en l'ajout d'une liqueur de dosage ; puis
d) une étape de rebouchage de la bouteille.

Préalablement à l'étape b), dite deuxième fermentation, la méthode de vinification peut également comprendre une étape a) d'assemblage comprenant la réalisation d'un assemblage d'un ou plusieurs vins de base, issu d'une première fermentation de jus de raisin.

De façon connue également, afin de favoriser le développement d'un goût souhaité pour ladite boisson alcoolisée, notamment afin de conférer des propriétés organoleptiques à la boisson alcoolisée, il peut être prévu au cours de la méthode de vinification, l'introduction d'une liqueur comprenant un ou plusieurs arômes selon le ou les goûts souhaités, le ou les arômes, notamment artificiels, généralement sous forme d'une substance aromatique liquide, étant dilués dans ladite liqueur.

L'emploi d'une ou plusieurs substances aromatiques sous forme liquide, diluées dans une liqueur au cours d'une méthode de vinification présente néanmoins l'inconvénient que le goût ainsi obtenu pour la boisson alcoolisée est artificiel et réduit la qualité perçue de la boisson par un consommateur.

Egalement, la réalisation d'une telle liqueur avec une ou plusieurs substances aromatiques sous forme liquide, diluées, s'avère complexe et longue à mettre en œuvre et augmente sensiblement son coût de revient, et donc celui du procédé de fabrication de la boisson alcoolisée mousseuse.

### Problème technique

L'objectif de l'invention est donc de pallier les inconvénients de l'état de la technique en proposant un procédé de fabrication d'une boisson alcoolisée mousseuse avec au moins un arôme supplémentaire présentant une qualité perçue pour un consommateur améliorée.

Un autre objectif de la présente invention est de proposer un tel procédé de fabrication simple et rapide à mettre en œuvre et de coût de revient réduit.

### Exposé de l'invention

Il est proposé un procédé de fabrication de boisson alcoolisée mousseuse par vinification, comprenant les étapes :
b) une étape de prise en mousse comprenant l'ajout de levure et de sucre, voire d'une liqueur de tirage, lors du tirage dans une bouteille contenant un assemblage d'un ou plusieurs vins de base, et de sorte à obtenir par fermentation du sucre la production de gaz carbonique dissout ; puis
c) une étape de dégorgement et de dosage, comprenant l'évacuation de la lie de levures mortes de la bouteille et en l'ajout d'une liqueur de dosage ; puis
e) une étape de rebouchage de la bouteille.

Selon l'invention, le procédé comporte en outre, entre l'étape c) et l'étape e) une étape d) d'introduction d'une gousse de vanille ou d'une ou plusieurs portions d'une gousse de vanille dans la bouteille.

Selon des caractéristiques optionnelles de l'invention, prises seules ou en combinaison :
- le procédé comprend en outre, préalablement à l'étape b), une étape a) d'assemblage comprenant la réalisation d'un assemblage d'un ou plusieurs vins de base, issu d'une première fermentation de jus de raisin.

L'invention concerne également une boisson alcoolisée mousseuse susceptible d'être obtenue par le procédé selon l'un des modes de réalisation ci-dessus.

### Brève description des dessins

D'autres caractéristiques, détails et avantages de l'invention apparaîtront à la lecture de la description détaillée ci-après, et à l'analyse du dessin annexé, sur lequel :

### Fig. 1

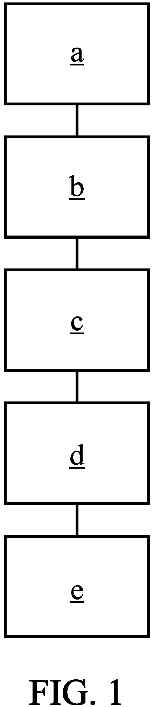

[Fig. 1] montre une vue schématique d'un procédé selon un mode de réalisation conforme à l'invention.

### Description des modes de réalisation

Le dessin et la description ci-après contiennent, pour l'essentiel, des éléments de caractère certain. Ils pourront donc non seulement servir à mieux faire comprendre la présente invention, mais aussi contribuer à sa définition, le cas échéant.

L'invention concerne un procédé de fabrication de boisson alcoolisée mousseuse par vinification, comprenant, comme visible sur l'exemple de réalisation de la figure 1, les étapes :
b) une étape de prise en mousse comprenant l'ajout de levure et de sucre, voire d'une liqueur de tirage, lors du tirage dans une bouteille contenant un assemblage d'un ou plusieurs vins de base, et de sorte à obtenir par fermentation du sucre la production de gaz carbonique dissout ; puis
c) une étape de dégorgement et de dosage, comprenant l'évacuation de la lie de levures mortes de la bouteille et en l'ajout d'une liqueur de dosage ; puis
e) une étape de rebouchage de la bouteille.

Selon l'invention, le procédé comporte en outre, entre l'étape c) et l'étape e) une étape d) d'introduction d'une gousse de vanille ou d'une ou plusieurs portions d'une gousse de vanille dans la bouteille.

Ainsi, avec le procédé selon l'invention, la gousse de vanille ou la/les portion(s) de gousse de vanille, qui sont des substances aromatiques sous forme solide est/sont introduite(s) dans la bouteille recevant la boisson alcoolisée mousseuse, et va/vont infuser dans celle-ci jusqu'à la fin du processus de vinification, qui peut s'étaler encore au moins sur plusieurs semaines, mais plus généralement encore sur plusieurs mois, voire plusieurs années, et de sorte à conférer son arôme de vanille à ladite boisson alcoolisée mousseuse.

L'introduction de la gousse de vanille ou de la/des portion(s) de gousse de vanille permet ainsi de conférer un goût de vanille à la boisson alcoolisée mousseuse, de manière simplifiée et pour un coût de revient réduit, notamment par rapport aux procédés de l'état de la technique prévoyant l'emploi d'une ou plusieurs substances aromatiques sous forme liquide, dilués dans une liqueur introduite dans la bouteille, car il n'y a pas de nécessité de fabriquer une telle liqueur.

Egalement, comme la gousse de vanille ou la/les portion(s) de gousse de vanille vien(nen)t infuser la boisson alcoolisée, le goût perçu par l'utilisateur correspondra directement à un goût naturel de vanille, car la gousse de vanille est une substance aromatique naturelle sous forme solide, ce qui améliore sa qualité perçue pour un consommateur, et notamment par rapport aux procédés de l'état de la technique prévoyant l'emploi d'une substance aromatique sous forme liquide diluée dans une liqueur introduite dans la bouteille.

De façon bien connue des procédés de fabrication de boisson alcoolisée mousseuse par vinification de l'état de la technique, par exemple pour la fabrication de champagne, le procédé de fabrication peut se dérouler de manière détaillée comme suit :
l'effervescence de la boisson alcoolisée peut être obtenue lors du tirage, par ajout dans la bouteille contenant un assemblage d'un ou plusieurs vins de base, au cours de l'étape b) du procédé selon l'invention, d'un mélange de sucre, de levure et de liqueur, ce qui provoque, par fermentation du gaz carbonique qui se dissout dans la boisson formant les bulles de la boisson alcoolisée mousseuse, et qui est généralement appelée deuxième fermentation ; puis
au cours ou à la suite de l'étape b) et préalablement à l'étape c) du procédé selon l'invention, après que la bouteille contenant la boisson ait été rebouchée, la boisson peut reposer ensuite sur des lies de levure morte, dans la bouteille couchée, selon une direction sensiblement horizontale et être empilée avec d'autres bouteilles dans une cave ; puis
toujours au cours ou à la suite de l'étape b) et préalablement à l'étape c) du procédé selon l'invention, la bouteille peut ensuite être remuée, et inclinée goulot vers le bas pour que les dépôts de levure morte s'agglutinent au niveau du goulot ; puis
le goulot peut être congelé afin de figer les dépôts de levure morte, préalablement ou au cours de l'étape c) du procédé selon l'invention ; puis
au cours de l'étape c) du procédé selon l'invention, le bouchon de la bouteille peut être retiré pour évacuer le dépôt de levure morte ; puis
au cours de l'étape c) du procédé selon l'invention, le volume de liquide perdu peut être remplacé par une liqueur de dosage, l'arôme sous forme solide étant introduit dans la bouteille préalablement, postérieurement ou simultanément à l'introduction de liqueur de dosage dans la bouteille, et avant le rebouchage de la bouteille au cours de l'étape e) du procédé selon l'invention.

La gousse de vanille ou la/les portion(s) de gousse de vanille peu(ven)t également être prévue(s) pour demeurer dans la bouteille à l'issue du processus de vinification, ce qui va conférer un aspect particulièrement esthétique à la bouteille.

La gousse de vanille ou la/les portion(s) de gousse de vanille introduite(s) dans la bouteille au cours de l'étape d) du procédé selon l'invention peu(ven)t avantageusement être un produit sec, c'est-à-dire contenant moins de 10% d'eau, de préférence moins de 5% d'eau. Cela permet d'éviter leur dégradation et le risque de proliférations de bactéries dans la bouteille au cours du reste de processus de vinification.

Selon un mode de réalisation, le procédé comprend en outre, préalablement à l'étape b), généralement appelée deuxième fermentation, une étape a) d'assemblage comprenant la réalisation d'un assemblage d'un ou plusieurs vins de base, issu d'une première fermentation de jus de raisin.

De façon bien connue des procédés de fabrication de boisson alcoolisée mousseuse par vinification de l'état de la technique, par exemple pour la fabrication de champagne, après le pressurage de raisins, le jus obtenu peut subir une première fermentation alcoolique, des sorte à obtenir un vin de base destiné à subir une deuxième fermentation en bouteille, puis au cours de l'étape a) du procédé selon l'invention, un assemblage de différents vin de base peut être effectué avant une mise en bouteille.

C'est dans cette bouteille contenant l'assemblage d'un ou plusieurs vins de base que peut alors être effectuée l'étape b) du procédé selon l'invention, généralement appelée deuxième fermentation.

L'invention concerne également une boisson alcoolisée mousseuse susceptible d'être obtenue par le procédé selon l'un des modes de réalisation.

L'ensemble des dispositions décrites précédemment concernant la boisson alcoolisée mousseuse obtenue avec le procédé de fabrication selon l'invention s'appliquent à la boisson alcoolisée mousseuse selon l'invention.

Notamment, la boisson alcoolisée mousseuse obtenue est plus simple et moins coûteuse à fabriquer qu'une boisson alcoolisée mousseuse obtenue avec un procédé de fabrication de l'état de la technique, grâce à l'emploi d'une gousse de vanille ou d'une ou plusieurs portions d'une gousse de vanille qui est une substance aromatique naturelle sous forme solide, et notamment en comparaison à l'utilisation d'une substance aromatique sous forme liquide, généralement artificielle, diluée dans une liqueur introduite dans la bouteille.

Egalement, une telle boisson alcoolisée mousseuse présente un goût naturel et donc une qualité perçue améliorée pour un consommateur.

De plus, la gousse de vanille ou la/les plusieurs portions de gousse de vanille, peu(ven)t également être prévue(s) pour demeurer dans la bouteille à l'issue du processus de vinification, ce qui va conférer un aspect particulièrement esthétique à la bouteille.

Ladite boisson alcoolisée mousseuse peut avantageusement être contenue dans la bouteille utilisée au cours de son procédé de fabrication, lors de sa commercialisation, mais pourrait alternativement être contenue dans un autre récipient.

Naturellement, d'autres modes de réalisation auraient pu être envisagés par l'Homme du métier sans pour autant sortir du cadre de l'invention définie par les revendications ci-après.

## Revendications

1. Procédé de fabrication de boisson alcoolisée mousseuse par vinification, comprenant les étapes :
b) une étape de prise en mousse comprenant l'ajout de levure et de sucre, voire d'une liqueur de tirage, lors du tirage dans une bouteille contenant un assemblage d'un ou plusieurs vins de base, et de sorte à obtenir par fermentation du sucre la production de gaz carbonique dissout ; puis
c) une étape de dégorgement et de dosage, comprenant l'évacuation de la lie de levures mortes de la bouteille et en l'ajout d'une liqueur de dosage ; puis
e) une étape de rebouchage de la bouteille,
**caractérisé en ce que** le procédé comporte en outre, entre l'étape c) et l'étape e) une étape d) d'introduction d'une gousse de vanille ou d'une ou plusieurs portions d'une gousse de vanille dans la bouteille.

2. Procédé selon la revendication 1, comprenant en outre, préalablement à l'étape b), une étape a) d'assemblage comprenant la réalisation d'un assemblage d'un ou plusieurs vins de base, issu d'une première fermentation de jus de raisin.

3. Boisson alcoolisée mousseuse susceptible d'être obtenue par le procédé selon la revendication 1 ou 2.
